(19) Europäisches Patentamt
European Patent Office
Office européen des brevets

(11) Veröffentlichungsnummer: **0 146 854**
A2

(12) **EUROPÄISCHE PATENTANMELDUNG**

(21) Anmeldenummer: 84114933.9

(22) Anmeldetag: 07.12.84

(51) Int. Cl.[4]: C 11 D 3/20
C 11 D 3/37, C 08 G 65/28

(30) Priorität: 15.12.83 DE 3345349

(43) Veröffentlichungstag der Anmeldung:
03.07.85 Patentblatt 85/27

(84) Benannte Vertragsstaaten:
AT BE CH DE FR GB IT LI NL SE

(71) Anmelder: Henkel Kommanditgesellschaft auf Aktien
Postfach 1100 Henkelstrasse 67
D-4000 Düsseldorf-Holthausen(DE)

(72) Erfinder: Piorr, Robert, Dr.
Kieselei 12
D-4030 Ratingen(DE)

(72) Erfinder: Schlüssler, Hans-Joachim, Dr.
Am Mühlenbusch 43
D-5657 Haan(DE)

(72) Erfinder: Nikolaus, Peter, Dr.
Mettmanner Strasse 124
D-4010 Hilden(DE)

(54) **Verwendung von Polyglykolethern als schaumdrückende Zusätze in schaumarmen Reinigungsmitteln.**

(57) Polyethylenglyko lethern der Formel (I) werden als schaumdrückende Zusätze für schaumarme, schwach sauer bis stark alkalisch reagierende Reinigungsmittel eingegesetzt:

$$R^1-CHOH-CHR^2-O-(CH_2-CH_2O)_n-R^3 \quad (I)$$

In dieser Formel bedeuten $R^1$ einen geradkettigen Alkylrest mit 6 bis 16 Kohlenstoffatomen, $R^2$ Wasserstoff oder einen Alkylrest mit 1 bis 8 Kohlenstoffatomen, $R^3$ einen Alkylrest mit 4 bis 8 Kohlenstoffatomen und n eine Zahl von 7 bis 12, mit der Maßgabe, daß $R^1$ und $R^2$ insgesamt 6 bis 16 Kohlenstoffatome enthalten. Die Verbindungen der Formel (I) sind gut biologisch abbaubar und besitzen eine hohe Alkali- uns Säurestabilität.

EP 0 146 854 A2

0146854

4000 Düsseldorf, den 12.12.1983
Henkelstraße 67

HENKEL KGaA
ZR-FE/Patente
Dr. Wa/Rk

Patentanmeldung
D 6974 EP

"Verwendung von Polyglykolethern als schaumdrückende Zusätze in schaumarmen Reinigungsmitteln"

Die Erfindung betrifft die Verwendung von endgruppenverschlossenen Hydroxyalkylpolyethylenglykolethern als schaumdrückende Zusätze in schaumarmen Reinigungsmitteln.

Für die Verwendung in Gewerbe und Industrie bestimmte wäßrige Reinigungsmittel, insbesondere solche für die Reinigung von Metall-, Glas- und Keramik und Kunststoffoberflächen enthalten in der Regel Substanzen, die in der Lage sind, einer unerwünschten Schaumentwicklung entgegenzuwirken. Der Einsatz von schaumdrückenden Zusätzen ist in den meisten Fällen dadurch bedingt, daß die von den Substraten abgelösten und in den Reinigungsbädern sich ansammelnden Verunreinigungen als Schaumbildner wirken. Daneben kann die Verwendung von Antischaummitteln auch aufgrund der Tatsache erforderlich sein, daß die Reinigungsmittel selbst Bestandteile enthalten, die unter den vorgegebenen Arbeitsbedingungen zu unerwünschter Schaumbildung Anlaß geben, beispielsweise Aniontenside oder bei Arbeitstemperatur schäumende nichtionische Tenside.

Als schaumdrückende Zusätze werden seit langem Anlagerungsprodukte von Alkylenoxiden an organische Verbindungen, die - vorzugsweise mehrere - reaktive Wasserstoffatome im Molekül besitzen, mit gutem Erfolg eingesetzt. Hier haben sich insbesondere Anlagerungsprodukte

...

von Propylenoxid an aliphatische Polyalkohole (siehe DE-PS 12 80 455 und DE-PS 16 21 592) und an aliphatische Polyamine (siehe DE-PS 12 89 597 und DE-PS 16 21 593) sowie Anlagerungsprodukte von Ethylenoxid und Propylenoxid an aliphatische Polyamine, insbesondere Ethylendiamin (siehe DE-PS 19 44 569), in der Praxis bewährt. Diese Alkylenoxidanlagerungsprodukte besitzen neben einer guten schaumdrückenden Wirkung auch die für die Anwendung in gewerblichen und industriellen Reinigungsmitteln zumeist erforderliche Alkalistabilität. Die Verbindungen dieser Klasse sind jedoch nicht hinreichend biologisch abbaubar, um den geltenden gesetzlichen Vorschriften (RVO zum Waschmittelgesetz) zu genügen.

Der vorliegenden Erfindung lag daher die Aufgabe zugrunde, schaumdrückende Substanzen aufzufinden, deren anwendungstechnische Eigenschaften denen der Mittel des bekannten Standes der Technik zumindest gleichkommen und die darüber hinaus auch noch die geforderte biologische Abbaubarkeit besitzen. Die Lösung dieser Aufgabe geht von der Erkenntnis aus, daß bestimmte, im folgenden definierte, endgruppenverschlossene Anlagerungsprodukte des Ethylenoxids an längerkettige aliphatische Alkohole bzw. vicinale Glykole in der Lage sind, die gestellten Anforderungen sowohl im Hinblick auf die anwendungstechnische Brauchbarkeit als auch im Hinblick auf die biologische Abbaubarkeit zu erfüllen.

---

Gegenstand der Erfindung ist die Verwendung von Hydroxyalkylpolyethylenglykolethern der nachstehenden Formel I als schaumdrückende Zusätze für schaumarme Reinigungsmittel:

$$R^1 - CHOH - CHR^2 - O - (CH_2CH_2O)_n - R^3 \quad (I)$$

in der $R^1$ einen geradkettigen Alkylrest mit 6 bis 16 Kohlenstoffatomen, $R^2$ Wasserstoff oder einen Alkylrest mit 1 bis 8 Kohlenstoffatomen, $R^3$ einen geradkettigen oder verzweigten Alkylrest mit 4 bis 8 Kohlenstoffatomen und n eine Zahl von 7 bis 12 bedeutet, mit der Maßgabe, daß die Gesamtzahl der in $R^1$ und $R^2$ enthaltenen Kohlenstoffatome 6 bis 16 beträgt.

Als Ausgangsmaterial für die Herstellung der Polyglykolether der Formel I können lineare oder verzweigte $C_4 - C_8$ - Alkohole, wie n-Butanol, i-Butanol, n-Amylalkohol, i-Amylalkohol, n-Hexanol, isomere Hexanole, n-Heptanol und isomere n-Heptanole sowie n-Octanol und isomere Octanole, wie z.B. 2-Ethylhexanol, einzeln oder im Gemisch eingesetzt werden. Sie werden in bekannter Weise mit Ethylenoxid im Molverhältnis von 1 : 7 bis 1 : 12 umgesetzt.

Die erhaltenen Reaktionsprodukte werden, vorzugsweise in Gegenwart von geeigneten alkalischen Katalysatoren, mit Epoxiden der Kettenlänge $C_8 - C_{18}$ umgesetzt. Es kommen sowohl 1,2-Epoxide als auch Verbindungen mit innenständiger Epoxidgruppe infrage. 1,2-Epoxide der Kettenlänge $C_{12}- C_{16}$

...

haben sich als besonders geeignet erwiesen. Auch Gemische von Epoxiden unterschiedlicher Kettenlänge sind geeignet. Das Molverhältnis von Alkylpolyglykolether zu Epoxid beträgt zweckmäßigerweise annähernd 1 : 1, der Zusatz an alkalischem Katalysator 0,1 bis 1 Gew.-%, bezogen auf die eingesetzte Epoxidmenge. Die Umsetzung erfolgt durch mehrstündiges Erhitzen auf Temperaturen von 100 bis 200 °C, vorzugsweise 120 bis 180 °C. Der Grad der Umsetzung ist leicht durch eine Bestimmung des Epoxidgehaltes des Gemisches zu ermitteln. Im allgemeinen genügt ein 4- bis 8-stündiges Erhitzen auf 150 bis 170 °C.

Weitere Angaben über die Umsetzung von Polyglykolethern mit langkettigen Epoxiden finden sich in der EP 88 039-A2.

In einer speziellen Ausführungsform der Erfindung werden Polyglykolether der Formel I eingesetzt, in der $R^1$ ein linearer $C_{12}$- $C_{16}$-Kohlenwasserstoff, $R^2$ = H und n eine Zahl von 8 bis 10 bedeutet. Besonders bevorzugt ist darüber hinaus die Verwendung solcher Verbindungen der Formel I, in der $R^3$ einen n-Butylrest darstellt.

Die Polyglykolether der Formel I können für sich allein oder in Kombination mit Polyethylenglykolethern eingesetzt werden, wie sie durch Anlagerung von 4 bis 20 Gewichtsteilen Ethylenoxid an 1 Gewichtsteil Polyglycerin mit einer Hydroxyzahl im Bereich von 900 bis 1200 und anschließende Veretherung der freien Hydroxylgruppen mit Alkylhalogeniden mit 4 bis 8 Kohlenstoffatomen erhältlich und in der DE- PS 33 15 952 (D 6562) beschrieben sind. Derartige Gemische aus den Polyglykolethern der Formel I

...

und den oben definierten endgruppenverschlossenen Polyglycerinpolyglykolethern im Gewichtsverhältnis von 1 : 1 bis 9 : 1, vorzugsweise von 2,3 : 1 bis 9 : 1 besitzen eine besonders ausgeprägte schaumdrückende Wirkung.

Die erfindungsgemäß zu verwendenden endgruppenverschlossenen Hydroxyalkylpolyglykolether der Formel I zeichnen sich durch eine hohe Alkali- und Säurestabilität, eine sehr wirksame Schauminhibierung in schwach sauren bis stark alkalischen Reinigungslösungen sowie durch günstige Abbauraten im Abwasser auf. Unter Zugrundelegung der gesetzlichen Bestimmungsmethoden beträgt die biologische Abbaubarkeit über 80 % BiAS-Abnahme.

Die Reinigungsmittel, in denen die endgruppenverschlossenen Polyglykolether erfindungsgemäß zur Anwendung kommen, können die in solchen Mitteln üblichen Bestandteile, wie Netzmittel, Gerüstsubstanzen und Komplexbildner, Alkalien oder Säuren, Korrosionsinhibitoren und gegebenenfalls auch antimikrobielle Wirkstoffe und/oder organische Lösungsmittel enthalten. Als Netzmittel kommen nichtionogene oberflächenaktive Substanzen, wie Polyglykolether, die durch Anlagerung von Ethylenoxid an Alkohole, insbesondere Fettalkohole, Alkylphenole, Fettamine und Carbonsäureamide erhalten werden, und anionaktive Netzmittel, wie Alkalimetall-, Amin- und Alkylolaminsalze von Fettsäuren, Alkylschwefelsäuren, Alkylsulfonsäuren und Alkylbenzolsulfonsäuren in Betracht. An Gerüstsubstanzen und Komplexbildnern können die Reinigungsmittel vor allem Alkalimetallorthophosphate, -polymerphosphate, -silikate, -borate, -carbonate, -polyacrylate und -glukonate sowie Zitronensäure, Nitriloessigsäure, Ethylendiamintetraessigsäure, 1-Hydroxyalkan-1,1-diphosphonsäuren, Aminotri-(methylenphosphonsäure) und Ethylendiamintetra-(methylenphosphon-

...

säure), Phosphonoalkanpolycarbonsäuren wie z.B. Phosphonobutantricarbonsäure und Alkalimetallsalze dieser Säuren enthalten. Hochalkalische Reinigungsmittel, insbesondere solche für die Flaschenreinigung, enthalten beträchtliche Mengen Ätzalkali in Form von Natrium- und Kaliumhydroxid. Wenn besondere Reinigungseffekte gewünscht werden, können die Reinigungsmittel organische Lösungsmittel, beispielsweise Alkohole, Benzinfraktionen und chlorierte Kohlenwasserstoffe, und freie Alkylolamine enthalten.

Unter Reinigungsmittel werden im Zusammenhang mit der Erfindung einmal die zur direkten Anwendung auf die zu reinigenden Substrate bestimmten wäßrigen Lösungen verstanden. Daneben umfaßt der Begriff Reinigungsmittel auch die zur Herstellung der Anwendungslösungen bestimmten Konzentrate und festen Mischungen.

Die gebrauchsfertigen Lösungen können schwach sauer bis stark alkalisch sein.

Die erfindungsgemäß zu verwendenden Hydroxyalkylpolyglykolether der Formel I werden den Reinigungsmitteln in solchen Mengen zugesetzt, daß ihre Konzentration in den gebrauchsfertigen Lösungen 10 bis 2500 ppm, vorzugsweise 50 bis 500 ppm, ausmacht.

...

## B e i s p i e l e

Herstellung der endgruppenverschlossenen Hydroxyalkylpolyglykolether

Beispiel 1

484 g (1 Mol) Anlagerungsprodukt von 10 Mol Ethylenoxid an 1 Mol n-Butanol, 227,5 g (1 Mol) lineares 1,2-Epoxytetradecan und 1,3 g Natriummethylat (30-%ige Lösung in Methanol) wurden im Vakuum zwecks Entfernung des mit dem Katalysator eingebrachten Methanols im Vakuum auf 100 °C erwärmt und dann unter Rühren unter einer Inertgasatmosphäre 6 Stunden auf 160 °C erhitzt. Das Reaktionsprodukt wurde nach dem Abkühlen mit der äquivalenten Menge Essigsäure neutralisiert und filtriert.

Die analytisch bestimmte Hydroxyzahl des Produktes betrug 80. Der Trübungspunkt, bestimmt in 1-%iger Natronlauge, lagunterhalb 5 °C.

In gleicher Weise wurden die in Tabelle I zusammengestellten, endgruppenverschlossenen Hydroxyalkylpolyglykolether hergestellt. Der Trübungspunkt wurde in 1-%iger Natronlauge bestimmt. EO steht für angelagerte Ethylenoxidgruppen, das Zeichen $<$ für "weniger als".

...

Tabelle 1

| Beispiel | Ausgangsstoffe Epoxid | Glykolether | OHZ | Trübungspunkt (°C) |
|---|---|---|---|---|
| 1 | 1,2-Epoxytetradecan | n-Butanol + 10 EO | 80 | <5 |
| 2 | 1,2-Epoxyoctan | n-Butanol + 9 EO | 99,5 | 37 |
| 3 | 1,2-Epoxydecan | n-Butanol + 9 EO | 100 | 19 |
| 4 | 1,2-Epoxydodecan | n-Butanol + 9 EO | 101 | 17 |
| 5 | 1,2-Epoxyhexadecan | n-Butanol + 9 EO | 75,6 | <5 |
| 6 | 1,2-Epoxyoctadecan | n-Butanol + 9 EO | 70 | <5 |
| 7 | 1,2-Epoxytetradecan | n-Hexanol + 10 EO | 69,5 | <5 |
| 8 | 1,2-Epoxydodecan | 2-Ethylhexanol + 10 EO | 69 | <5 |

...

Herstellung der endgruppenverschlossenen Polyglycerinpolyethylenglykolethern gemäß DE-PS 33 15 962

In einem Autoklaven wurden 137 g Polyglycerin (Hydroxylzahl 961) in Gegenwart von 3 g Natriummethylat mit 1488 g Ethylenoxid (Gewichtsverhältnis 1 : 10,9) bei 180 °C und 10 bar umgesetzt. Es wurden 1313 g Polyglycerinethylenglykolether mit einer Hydroxylzahl von 113 erhalten.

350 g des erhaltenen Produkts, 171 g n-Hexylchlorid und 228 g 75-gewichtsprozentige Natriumhydroxidlösung wurden 4 Stunden lang bei 120 °C gerührt. Aus dem abgekühlten Reaktionsgemisch wurde die wäßrige Phase abgetrennt. Die organische Phase wurde so lange mit Wasser von 50 °C gewaschen, bis die Waschflüssigkeit neutral reagierte. Nicht umgesetztes Hexylchlorid und Wasser wurden aus dem Reaktionsgemisch durch Erhitzen auf 150 °C im Vakuum entfernt. Es wurden 281,5 g Polyglycerinpolyethylenglykolhexylether (Polyglycerin + 10,9 Butyl-EO) erhalten. Die Hydroxylzahl des Produktes betrug 3,5. Das Reaktionsprodukt wird im folgenden als Produkt B bezeichnet.

...

Prüfung der Entschäumerwirkung

Die Prüfung der Antischaumwirkung erfolgte mit Testlösungen, die 1 Gewichtsprozent Natriumhydroxid und 0,03 Gewichtsprozent (300 ppm) Entschäumer enthielten. Diese Lösungen wurden im Verlauf der Tests in Sprüngen von jeweils 100 ppm steigende Mengen von Triethanolamintetrapropylenbenzolsulfonat als Testschäumer zugesetzt.

Jeweils 200 ml der Testlösungen wurden bei 65 °C in der Schaumschlagapparatur nach DIN 53 902 geprüft. Das Schaumvolumen in ml wurde jeweils 5 Sekunden nach einer Serie von 100 Schlägen in 100 Sekunden abgelesen. Für jede Testschäumerkonzentration wurde ein Durchschnittswert aus 5 Einzelmessungen ermittelt. Aus den erhaltenen Ergebnissen ist in der zweiten Spalte der nachstehenden Tabelle II jeweils das Schaumvolumen angegeben, das bei einer Testschäumerkonzentration von 1200 ppm beobachtet wurde. Als zweiter repräsentativer Meßwert ist in der dritten Spalte der Tabelle II die Testschäumerkonzentration angegeben, bei der zum ersten Mal ein Schaumvolumen über 200 ml gemessen wurde.

...

Tabelle II

| Entschäumer nach Beispiel | ml Schaum bei 1200 ppm Testschäumer | ppm Testschäumer bei 200 ml Schaum |
|---|---|---|
| 2 | 300 | 600 |
| 3 | 300 | 1200 |
| 4 | 200 | 1600 |
| 1 | 30 | 2000 |
| 5 | 35 | 2200 |
| 6 | 40 | 1800 |
| 7 | 30 | 2000 |
| 8 | 30 | 1800 |

...

Beispiel 9

Durch mechanisches Vermischen der Komponenten wurde ein lagerbeständiges festes Flaschenreinigungsmittel folgender Zusammensetzung (GT = Gewichtsteile) hergestellt:

80 GT Ätznatron
12 GT Natriumtripolyphosphat
5 GT Natriumsilikat (Molverhältnis $Na_2O : SiO_2 = 3,35$)
3 GT Produkt gemäß Beispiel 1

Mit einer 1-gewichtsprozentigen Lösung dieses Reinigungsmittels wurden Milchflaschen bei 80 °C in einer handelsüblichen Flaschenreinigungsanlage mit einer Laugenzone und einer Stundenleistung von 18 000 Flaschen gereinigt. Bei guter Reinigungswirkung wurde keine störende Schaumentwicklung beobachtet.

Beispiel 10

Durch mechanisches Vermischen der Komponenten wurde ein lagerbeständiges festes Wirkstoffgemisch folgender Zusammensetzung erhalten:

80 GT Natriumtripolyphosphat
20 GT Produkt gemäß Beispiel 5

...

In einer Flaschenreinigungsanlage mit drei Laugenzonen und einer Stundenleistung von 80 000 Flaschen wurden bei 85 °C Bierflaschen gereinigt. Die Bierflaschen waren mit Papieretiketten unter Verwendung eines Kaseinleims etikettiert, der sonst zu starkem Schäumen in den Tauchbädern führt. Wurde als Reinigungslösung 1,5-gewichtsprozentige Natronlauge eingesetzt, die 0,15 Gewichtsprozent des oben beschriebenen Wirkstoffgemisches enthielt, so konnte die Anlage ohne störende Schaumentwicklung betrieben werden.

Beispiel 11

Durch mechanisches Vermischen der Komponenten wurde ein lagerbeständiges Wirkstoffgemisch folgender Zusammensetzung erhalten:

40 GT Na-Ethylendiamintetraacetat
20 GT Natriumtripolyphosphat
30 GT Natriumglukonat
10 GT Produkt gemäß Beispiel 1

In einer handelsüblichen Flaschenreinigungsanlage mit zwei getrennten Laugenzonen und einer Stundenleistung von 24 000 Flaschen wurden Weinflaschen bei 85 °C gereinigt. Als Reinigungslösung wurde 1,5-gewichtsprozentige Natronlauge verwendet, der 0,5 Gewichtsprozent des oben beschriebenen Konzentrates zugesetzt worden waren. Die Reinigung verlief ohne störende Schaumentwicklung. Die durchgesetzten Flaschen waren einwandfrei gereinigt.

...

Beispiel 12

Durch Auflösen der Komponenten in Phosphorsäure wurde ein Reinigungsmittelkonzentrat der folgenden Zusammensetzung hergestellt:

5 GT Aminotri-(methylenphosphonsäure)
10 GT 1-Hydroxyethan-1,1-diphosphonsäure
5 GT Phosphonobutantricarbonsäure
27 GT Produkt gemäß Beispiel 1
3 GT Produkt B
10 GT Ethanol
40 GT Phosphorsäure, 75 Gewichtsprozent

In einer konventionellen Flaschenreinigungsanlage mit drei Laugenbädern wurden Mineralwasserflaschen bei 80 °C gereinigt. Als Reinigungslösung diente eine 2-gewichtsprozentige Natronlauge, der 0,1 Gewichtsprozent des oben beschriebenen Konzentrats zugesetzt worden war. Die Reinigung verlief ohne störende Schaumentwicklung. Die durchgesetzten Flaschen waren einwandfrei gereinigt.

Beispiel 13

Für die Reinigung von metallischen Oberflächen im Spritzverfahren wurde ein lagerstabiles Reinigungsmittel der nachstehenden Zusammensetzung durch mechanisches Vermischen der Komponenten hergestellt:

...

80 GT Natriummetasilikat-Pentahydrat
16 GT Natriumtripolyphosphat
4 GT Kokosamin + 12 EO
1 GT Produkt gemäß Beispiel 1

Die Schaumbildung und der Schaumzerfall einer 2-gewichtsprozentigen Lösung dieses Reinigungsmittels wurde nach DIN 53 902 bei 60 °C im Vergleich zu einem Mittel ohne Zusatz des Produkts nach Beispiel 1, jedoch sonst gleicher Zusammensetzung geprüft. Die Ergebnisse sind in der Tabelle III wiedergegeben.

Tabelle III

| Reinigungsmittel | ml Schaum nach min. | | | |
|---|---|---|---|---|
| | 0 | 1 | 2 | 10 |
| Vergleich | 530 | 140 | 0 | 0 |
| erfindungsgemäß | 180 | 15 | 0 | 0 |

...

Beispiel 14

Durch mechanisches Vermischen der Komponenten wurde ein Tauchentfettungsmittel für metallische Werkstoffe folgender Zusammensetzung hergestellt:

40 GT Natriummetasilikat-Pentahydrat
35 GT Natriumcarbonat
20 GT Natriumtripolyphosphat
2,5 GT Natriumalkylbenzolsulfonat
2,5 GT Nonylphenol + 14 EO
4,5 GT Produkt gemäß Beispiel 1
0,5 GT Produkt B

Mit einer 4-gewichtsprozentigen Lösung dieses Reinigungsmittels wurden fettverschmutzte Formteile aus Stahl bei 60 °C im Tauchverfahren gereinigt. Die Entfettungswirkung war sehr gut; es wurde keine störende Schaumentwicklung beobachtet.

Beispiel 15

Durch Auflösen der Komponenten in Wasser wurde ein lagerstabiles Konzentrat für die Reinigung von Metalloberflächen mit folgender Zusammensetzung hergestellt:

30 GT Natriumcaprylat
10 GT Borax
14 GT Natriumtripolyphosphat
10 GT Triethanolamin
2 GT Monoethanolamin
6 GT Produkt gemäß Beispiel 1
78 GT Wasser

...

Mit einer 1,5-gewichtsprozentigen Lösung des Reinigungsmittels (pH-Wert 8,5) wurden Eisenoberflächen bei 50 - 55 °C im Spritzverfahren gereinigt. Bei guter Reinigungswirkung trat keine störende Schaumentwicklung auf.

Beispiel 16

Durch Auflösen der Komponenten in Wasser wurde ein lagerstabiles Konzentrat für die Reinigung von Metalloberflächen mit folgender Zusammensetzung erhalten:

25 GT Diethanolaminsalz der Isononansäure
20 GT Diethanolamin
1 GT Benztriazol
4 GT Produkt gemäß Beispiel 6
50 GT Wasser

Eine 1-gewichtsprozentige Lösung dieses Reinigungsmittels wurde bei 50 - 55 °C zur Spritzreinigung von Graugußteilen eingesetzt. Bei guter Reinigungswirkung wurde keine störende Schaumentwicklung beobachtet.

...

## P a t e n t a n s p r ü c h e

1. Verwendung von Hydroxyalkylpolyethylenglykolethern der nachstehenden Formel I als schaumdrückende Zusätze für schaumarme Reinigungsmittel:

$$R^1 - CHOH - CHR^2 - O - (CH_2 - CH_2O)_n - R^3 \quad (I)$$

in der $R^1$ einen geradkettigen Alkylrest mit 6 bis 16 Kohlenstoffatomen, $R^2$ Wasserstoff oder einen Alkylrest mit 1 bis 8 Kohlenstoffatomen, $R^3$ einen geradkettigen oder verzweigten Alkylrest mit 4 bis 8 Kohlenstoffatomen und n eine Zahl von 7 bis 12 bedeuten, mit der Maßgabe, daß die Gesamtzahl der in $R^1$ und $R^2$ enthaltenen Kohlenstoffatome 6 bis 16 beträgt.

2. Verwendung von Hydroxyalkylpolyethylenglykolethern nach Anspruch 1, dadurch gekennzeichnet, daß in der Formel I n eine Zahl von 8 bis 10 bedeutet.

3. Verwendung von Hydroxyalkylpolyethylenglykolethern nach Anspruch 1, dadurch gekennzeichnet, daß in der Formel I $R^1$ für einen linearen Alkylrest mit 12 bis 16 Kohlenstoffatomen steht.

4. Verwendung von Hydroxyalkylpolyethylenglykohlethern nach Anspruch 1, dadurch gekennzeichnet, daß in der Formel I $R^3$ für einen n-Butylrest steht.

...

5. Verwendung von Gemischen aus Hydroxyalkylpolyethylenglykolethern der Formel I und Polyethylenglykolethern, wie sie durch Anlagerung von 4 bis 20 Gewichtsteilen Ethylenoxid an 1 Gewichtsteil Polyglycerin mit einer Hydroxylzahl von 900 bis 1200 und anschließende Veretherung der freien Hydroxylgruppen mit Alkylhalogeniden mit 4 bis 8 Kohlenstoffatomen erhältlich sind, im Gewichtsverhältnis von 1 : 1 bis 9 : 1, vorzugsweise 2,3 : 1 bis 9 : 1, als schaumdrückende Zusätze für schaumarme Reinigungsmittel.

6. Verwendung von Polyglykolethern nach den Ansprüchen 1 bis 5, in solchen Mengen, daß ihre Konzentration in den gebrauchsfertigen Lösungen 10 bis 2500 ppm, vorzugsweise 50 bis 500 ppm ausmacht.